# EUROPÄISCHE PATENTANMELDUNG

(11) **EP 1 093 965 A2**
(43) Veröffentlichungstag der Anmeldung: **25.04.2001**
(21) Anmeldenummer: 00118926.5
(22) Anmeldetag: 01.09.2000
(51) Int. Cl.: B60Q 1/14

(54) **Vorrichtung zur Steuerung der Lichtverteilung einer Scheinwerferanordnung eines Fahrzeuges**

(30) Priorität: 20.10.1999 DE 19950505
(71) Anmelder: Dr.Ing. h.c.F. Porsche Aktiengesellschaft, 70435 Stuttgart (DE)
(72) Erfinder: Brinkmann, Dirk, 75446 Wiernsheim (DE); Eberhardt, Stefan, 71522 Backnang (DE)

(57) **Zusammenfassung**

Die Erfindung betrifft eine Vorrichtung zur Steuerung der Lichtverteilung einer Scheinwerferanordnung (1) eines Fahrzeuges (17) mit einer ersten Lichtquelle (11) für ein Zusatzlicht und einer zweiten Lichtquelle (12) für ein Fahrlicht. Um eine verbesserte Vorrichtung zur Steuerung der Lichtverteilung einer Scheinwerferanordnung (1) eines Fahrzeuges (17) zu schaffen, wird vorgeschlagen, eine Lichtquelle (11) für ein Zusatzlicht schwenkbar zu lagern. Dabei soll die Lichtquelle (11) für ein Zusatzlicht in einer ersten Position außerhalb des Fahrbahnrandes liegende Teile der eigenen Fahrbahn ausleuchten, während sie in ihrer zweiten Position die eigene Fahrbahn, vorzugsweise in größerer Entfernung, ausleuchtet. Die Lichtquelle (11) für das Zusatzlicht ist so angeordnet, daß sie einen gemeinsamen Lichtaustrittsbereich mit wenigstens einer anderen Lichtquelle aufweist.

## Beschreibung

Die Erfindung betrifft eine Vorrichtung zur Steuerung der Lichtverteilung einer Scheinwerferanordnung eines Fahrzeuges nach dem Oberbegriff des Patentanspruches 1.

Bei einem gattungsgemäßen Verfahren zur Steuerung der Lichtverteilung einer Scheinwerferanordnung nach der DE 38 44 364 C2 wird zur Vermeidung einer Minderung der Sehleistung des Fahrers eines Fahrzeuges bei entgegenkommendem Verkehr die eigene Fahrbahnseite mit einem erhöhten Lichtpegel ausgeleuchtet. Hierzu erfaßt ein Lichtsensor verschiedene Bereiche eines Sichtfeldes des Fahrers und der Lichtpegel zur Ausleuchtung der eigenen Fahrbahn wird erhöht, wenn ein Schwellwert für die Lichtemissionen aus dem Bereich der Gegenfahrbahn überschritten wird. Wird hierbei jedoch ein Schwellwert für die Lichtemissionen aus dem Bereich der eigenen Fahrbahn oder ein Schwellwert für die Lichtemissionen in einem oberhalb der Fahrbahnen liegenden Bereich unterschritten, so wird der Lichtpegel wieder reduziert. Zur Erhöhung des Lichtpegels ist zusätzlich zum Abblendlicht ein weiterer Scheinwerfer vorgesehen, der in der zuvor beschriebenen Weise zugeschaltet werden kann. Alternativ ist in einem vorhandenen Scheinwerfer eine bewegbare Blende vorgesehen, mit der die Lichtverteilung geändert werden kann. Anstelle der bewegbare Blende kann auch die Lichtquelle verschoben werden, so daß sich die Lage des Punktes höchster Lichtintensität verschiebt.

Gegenüber diesem Stand der Technik ist es Aufgabe der Erfindung, eine verbesserte Vorrichtung zur Steuerung der Lichtverteilung einer Scheinwerferanordnung eines Fahrzeuges zu schaffen.

Erfindungsgemäß wird diese Aufgabe mit den Merkmalen des Patentanspruches 1 gelöst. Es wird vorgeschlagen, eine Lichtquelle für ein Zusatzlicht schwenkbar zu lagern. Dabei soll die Lichtquelle für ein Zusatzlicht in einer ersten Position im Bereich des Fahrbahnrandes liegende Teile der eigenen Fahrbahn ausleuchten, während sie in ihrer zweiten Position die eigene Fahrbahn, vorzugsweise in größerer Entfernung, ausleuchtet. In vorteilhafter Weise ist somit eine Scheinwerteranordnung geschaffen, bei der ohne größeren baulichen Aufwand neben einem Zusatzlicht (z.B. zur Verminderung der Blendung bei Gegenverkehr) gleichzeitig auch ein Zusatz-Fernscheinwerfer (hier wird die eigene Fahrbahn erst in größerer Entfernung ausgeleuchtet) oder ein Autobahnlicht (dies ist en Lichtbündel mit einer im wesentlichen waagerechten und scharfen Hell-Dunkel-Grenze, die gegenüber dem Abblendlicht leicht angehoben ist) realisierbar ist. Die Schwenkbarkeit der Lichtquelle kann hierbei dadurch realisiert werden, daß der Reflektor zusammen mit der Lichtquelle oder nur die Lichtquelle oder nur der Reflektor verschwenkt werden.

Vorteilhafte Weiterbildungen der Erfindung sind in den Unteransprüchen beschrieben.

Es wird vorgeschlagen, die Lichtquelle für das Zusatzlicht ist so anzuordnen, daß sie einen gemeinsamen Lichtaustrittsbereich mit wenigstens einer anderen Lichtquelle aufweist. Durch diese Maßnahme wird in vorteilhafter Weise beim Einschalten der Lichtquelle für ein Zusatzlicht keine neue leuchtende Fläche geschaffen, die den Gegenverkehr ablenken oder gar irritieren könnte. Für einen solchen gemeinsamen Lichtaustrittsbereich kann beispielsweise
- die Lichtquelle für ein Zusatzlicht im Bereich des Abblendlichtes angeordnet oder
- mit einem Positionslicht (Standlicht) kombiniert werden.
Abblendlicht und Lichtquelle für ein Zusatzlicht bzw. das Positionslicht könnten hierzu beispielsweise in einem gemeinsamen Reflektor angeordnet sein. Es ist auch möglich, die Lichtquelle für ein Zusatzlicht und das Abblendlicht unter einer gemeinsamen Deckscheibe anzuordnen und einen um die beiden Lichtquellen herum gebildeten Raum mit Hilfe einer zusätzlichen Leuchte, wie z.B. dem Positionslicht, zusätzlich aufzuhellen, so daß trotz der getrennten Lichterzeugungssysteme das Bild eines einheitlichen Scheinwerfers erhalten bleibt.

Schließlich ist es vorgesehen, zur Ansteuerung der Lichtquelle für ein Zusatzlicht eine Steuereinrichtung vorzusehen, die die Lichtquelle für ein Zusatzlicht einschaltet und auch deren Position einstellt. Eingangsseitig weist die Steuereinrichtung eine Vergleichseinrichtung auf, die ihrerseits mit Lichtsensoren z.B. für den Bereich einer Gegenfahrbahn und der Umgebungshelligkeit sowie ggf. weiteren Sensoren z.B. für eine Fahrgeschwindigkeit verbunden ist. Der Lichtsensor erfaßt im wesentlichen das Sichtfeld eines Fahrers in Fahrtrichtung und bestimmt die Lichtemissionen für verschiedene Bereiche dieses Sichtfeldes. Die Vergleichseinrichtung vergleicht die Intensität der Lichtemissionen für jeden Bereich mit jeweils einem Schwellwert und erzeugt aus dem Ergebnis dieses Vergleiches ein Steuersignal für das Zusatzlicht.

Das Zusatzlicht kann auch als Schlechtwetterlicht verwendet werden, bei dem bei reflektierender Straßenoberfläche, z.B. durch Regenwasser, die Ausleuchtung des eigenen Fahrbahnrandes erhöht wird. Die Zuschaltung eines solchen Schlechtwetterlichtes kann manuell über einen gesonderten Schalter oder automatisch mit Hilfe eines geeigenten Sensors, z.B. eines Regensensors, erfolgen.

Die Erfindung ist nachstehend anhand des in den Figuren dargestellten Ausführungsbeispieles näher erläutert. Es zeigen:
- Fig. 1: eine Übersichtsdarstellung einer Scheinwerferanordnung eines Fahrzeuges,
- Fig. 2: eine Darstellung eines Sichtfeldes eines Fahrers des Fahrzeuges,
- Fig. 3: eine Lichtverteilung aus einer Vogelperspektive,
- Fig. 4: einen zeitlichen Verlauf eines durch einen Ein- und Ausschaltverzögerer erzeugten Ausgangssignales für den zweiten Scheinwerfer,
- Fig. 5: eine Anordnung der Scheinwerfer,
- Fig. 6: eine alternative Anordnung der Schweinwerfer zu Fig 5,
- Fig. 7: eine weitere alternative Anordnung der Schweinwerfer zu Fig. 5,
- Fig. 8: eine schematische Darstellung einer Einrichtung zum Verschwenken des Scheinwerfers, und
- Fig. 9: eine Detaildarstellung von Gelenken nach Fig. 8.

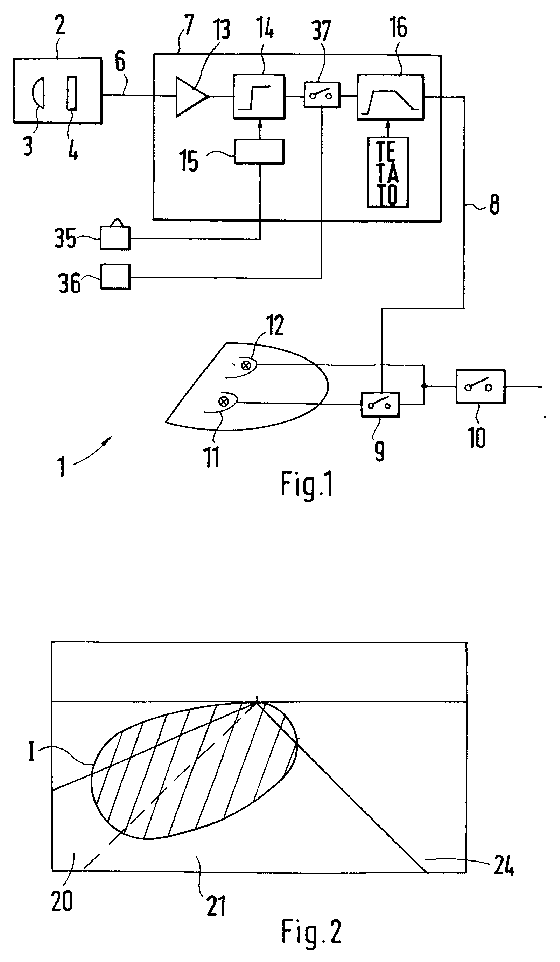

Die in Fig. 1 dargestellte Scheinwerferanordnung 1 eines nicht näher gezeigten Fahrzeuges umfaßt einen in Fahrtrichtung des Fahrzeuges angeordneten Lichtsensor 2, der Lichtimissionen in einem Sichtfeld des Fahrers erfaßt. Der Lichtsensor 2 besteht aus einer Abbildungsoptik 3 und einer in der Abbildungsebene angeordneten lichtempfindlichen Schicht 4. Über eine Signalleitung 6 gelangen die Ausgangssignale des Lichtsensors 2 in eine Steuereinrichtung 7. Ein Ausgangssignal 8 der Steuereinrichtung 7 wird auf eine Schalteinrichtung 9 gegeben, die auf einen ersten Scheinwerfer 11 einwirkt. Dabei ist der Scheinwerfer 11 ein Zusatzscheinwerfer zur Ausleuchtung eines (in Fig. 2 dargestellten) Fahrbahnrandes 24 vorgesehen, während ein von einem Lichtschalter 10 angesteuerter zweiter Scheinwerfer 12 ein an sich bekannter Abblendlicht-Scheinwerfer ist. Der Lichtschalter 10 wirkt auf beide Scheinwerfer 11,12. Anstelle eines Stellmotores 34 kann selbstverständlich auch ein Hubmagnet o.ä. vorgesehen sein.

Die Steuereinrichtung 7 kann eingangsseitig einen Verstärker 13 zur Aufbereitung des über die Signalleitung 6 eingehenden Signales aufweisen. Nachgeschaltet ist eine Vergleichseinrichtung 14, die das Ausgangssignal des Verstärkers 13 mit einem von einem Schwellwertgeber 15 gelieferten Signal vergleicht. Der Schwellwertgeber 15 ist hierbei mit einem Sensor 35 für die Umgebungshelligkeit verbunden, der ein Signal U liefert. Der Sensor 35 ist dabei nach oben gerichtet. Bereits innerhalb des Sensors 35 erfolgt eine gleitende Mittelwertbildung, um kurzfristige Einflüsse, wie sie z.B. von Straßenlampen erzeugt werden, auszugleichen. Der Schwellwertgeber paßt den an die Vergleichseinrichtung gelieferten Schwellwert an die Umgebungshelligkeit U in der Weise an, daß dieser Schwellwert mit steigender Umgebungshelligkeit U ebenfalls ansteigt. Ein der Vergleichseinrichtung 14 nachgeschalteter Ein- und Ausschaltverzögerer 16 mit voreingestellten Verzögerungszeiten TE für die Einschaltverzögerung, TA für die Ausschaltverzögerung und TO für eine der Ausschaltverzögerung vorgeschaltete Totzeit erzeugt schließlich das kontinuierliche einstellbare (dimmbare) Ausgangssignal 8.

Die Weitergabe des Ausgangssignales 8 an die Schalteinrichtung 9 wird dabei von einem Schalter 37 gesteuert, der mit einem Geber 36 für eine Fahrgeschwindigkeit v verbunden ist. Das Ausgangssignal 8 wird im vorliegenden Beispiel nur dann weitergegeben, wenn die vom Geber 36 erfaßte Fahrgeschwindigkeit v innerhalb eines Bereiches zwischen 30 km/h und 120 km/h liegt. Es ist ebenfalls möglich, die gesamte Steuereinrichtung 7 nur innerhalb dieses Bereiches der Fahrgeschwindigkeit v zu aktivieren. Zusätzlich kann sichergestellt werden, daß ein Abschalten der Steuereinrichtung 7 oder der Weitergabe des Ausgangssignales 8 nur dann erfolgen kann, wenn das Ausgangssignal 8 den Wert Null aufweist. So kann der Zusatzscheinwerfer 11 bei Verlassen des Fahrgeschwindigkeitsbereiches nicht im laufenden Betrieb abgeschaltet werden, sondern es wird nur das Einschalten des Zusatzscheinwerfers 11 unterdrückt, wenn der Fahrgeschwindigkeitsbereich verlassen worden ist.

Fig. 2 zeigt das von dem lichtempfindlichen Feld 4 aufgenommene Sichtfeld des Fahrers. Der gestrichelt dargestellte Bereich 1 steht für den Bereich einer Gegenfahrbahn 20. Der Bereich 1 ist so groß gewählt, daß entgegenkommende Fahrzeuge erfaßt werden. Es hat sich gezeigt, daß hierbei auch ein Abschnitt der eigenen Fahrbahn erfaßt werden sollte, um entgegenkommende Fahrzeuge auch auf kurviger Strecke erkennen zu können.

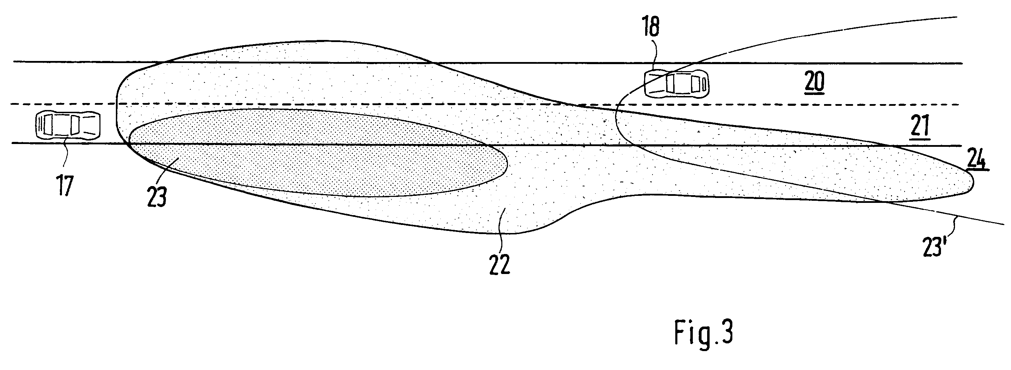

Fig. 3 zeigt die Lichtverteilung der Scheinwerfer 11, 12 aus einer Vogelperspektive. Das Fahrzeug 17 befindet sich auf seiner Richtungsfahrbahn 21, ein weiteres Fahrzeug 18 auf einer Gegenfahrbahn 20. Der Abblendlicht-Scheinwerfer 12 des eigenen Fahrzeuges 17 erzeugt den Lichtkegel 22, während der Zusatzscheinwerfer 11 in seiner Ausgangsposition den Lichtkegel 23 erzeugt. Durch den Stellmotor 34 kann der Zusatzscheinwerter 11 in eine zweite Position 23' verschwenkt werden, in der er als Zusatz-Fernscheinwerfer, als Reichweitenunterstützung für das Abblendlicht (z.B. bei Autobahnfahrt) oder als Lichthupe (vorteilhaft z.B. in Verbindung mit einer Entladungslampe als erstem Scheinwerfer 11 zur Erzeugung von Abblendlicht und Fernlicht) verwendet werden kann.

Die Steuereinrichtung 7 vergleicht ständig das von dem lichtempfindlichen Feld für den Bereich I gelieferte Signal mit einem im Schwellwertgeber 15 für den Bereich 1 abgespeicherten Schwellwert, der mit Hilfe des Signales U ständig an die Umgebungshelligkeit angepaßt wird. Wird in der Vergleichseinrichtung 14 erkannt, daß im Bereich I, d.h. im Bereich der Gegenfahrbahn 20, die Lichtintensität den vom Schwellwertgeber 15 vorgegebenen Grenzwert überschreitet, so gibt die Steuereinrichtung 7 ein Ausgangssignal 8 ab, das die erste Schalteinrichtung 9 zum Zuschalten des Zusatzscheinwerfers 11 veranlaßt. Durch diese Maßnahme wird der Lichtkegel 22 durch den Lichtkegel 23 ergänzt und ein Fahrbahnrandbereich 24 (s. Fig. 2) verstärkt ausgeleuchtet.

Durch die - in dem von dem Lichtkegel 23 erfaßten Bereich - deutlich erhöhte Ausleuchtung wird der Blick des Fahrers automatisch von der Gegenfahrbahn 20 weg auf den nun heller erleuchteten Fahrbahnrand 24 gezogen. Damit wird eine von einem auf der Gegenfahrbahn 20 entgegenkommenden Fahrzeug 18 hervorgerufene Blendung vermindert, ohne daß die Blendung des entgegenkommenden Fahrzeuges 18 erhöht würde. Der Lichtkegel 23 ist hierzu so ausgerichtet, daß kein Streulicht in Richtung der Gegenfahrbahn 20 gelangt.

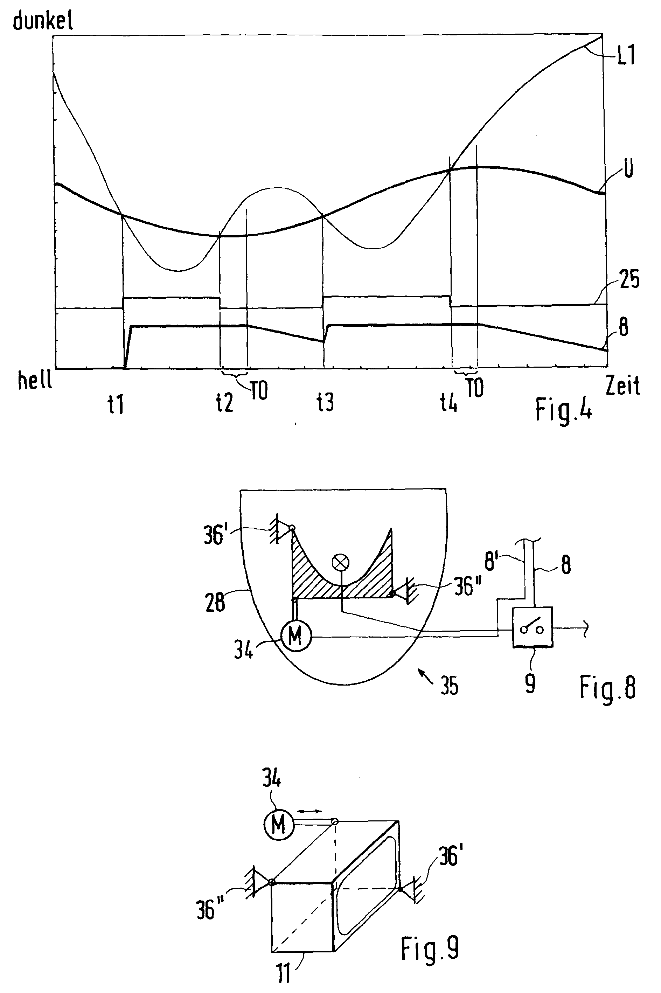

Fig. 4 zeigt den zeitlichen Verlauf des Ausgangssignales 8, des Signales U für die Umgebungshelligkeit sowie des Signales L1 für die Helligkeit im Bereich I. Zwischen den Zeitpunkten t1 und t2 sowie t3 und t4 befindet sich auf der Gegenfahrbahn 20 jeweils ein entgegenkommendes Fahrzeug 18, zu erkennen an den Signalpegeln des Signales L1. Zum ersten Zeitpunkt t1 ist ein erstes entgegenkommendes Fahrzeug 18 so nahe dem eigenen Fahrzeug 17, daß die Gefahr einer Blendung besteht. Zu diesem Zeitpunkt gibt der Vergleicher 14 ein Signal 25 an den Ein- und Ausschaltverzögerer 16 ab. Durch den Ein- und Ausschaltverzögerer 16 erreicht das Ausgangssignal 8 daraufhin nicht sofort den Wert 100 %, sondern erst nach einer voreingestellten Verzögerungszeit TE von 0,2 s. Zum Zeitpunkt t2 passiert das entgegenkommende Fahrzeug 18 das eigene Fahrzeug 17, so daß keine Gefahr einer Blendung mehr besteht. Zu diesem Zeitpunkt erlischt daher das Signal 25. Das Ausgangssignal 8 hingegen fällt nicht sofort auf 0 % ab, sondern wird zunächst über eine im Ein- und Ausschaltverzögerer 16 voreingestellte Totzeit TO von 2 s gehalten und dann über eine ebenfalls voreingestellte Verzögerungszeit TA von hier 3 s langsam zurückgenommen.

Zum dritten Zeitpunkt t3 hat sich ein zweites Fahrzeug soweit genähert, daß wiederum die Gefahr einer Blendung besteht. Zu diesem Zeitpunkt t3 ist das Ausgangssignal 8 (und damit auch der Lichtstrom des Zusatzscheinwerfers 11) erst auf 70 % abgesunken und wird nun mit der für die Einschaltverzögerung voreingestellten Verzögerungszeit TE wieder auf 100 % angehoben. Zum vierten Zeitpunkt t4 passiert das zweite Fahrzeug das eigene Fahrzeug 17. Da sich im vorliegenden Beispiel kein weiteres Fahrzeug nähert, sinkt nun das Ausgangssignal 18 nach Ablauf der Totzeit TO innerhalb der voreingestellten Verzögerungszeit TA auf 0 % ab, d.h. der Zusatzscheinwerfer 11 wird vollständig ausgeschaltet.

Der vom Schwellwertgeber 15 an den Vergleicher 14 gelieferte Schwellwert hängt hierbei von der vom Sensor 35 ermittelten (mittleren) Umgebungshelligkeit U ab. Der Schwellwert steigt dabei mit steigender Ungebungshelligkeit, so daß im Ergebnis die für den überwachten Bereich I ermittelte Helligkeit stets um einen bestimmten Betrag oder Anteil oberhalb der Umgebungshelligkeit liegen muß, um eine Zuschaltung des Zusatzscheinwerfers 11 auszulösen.

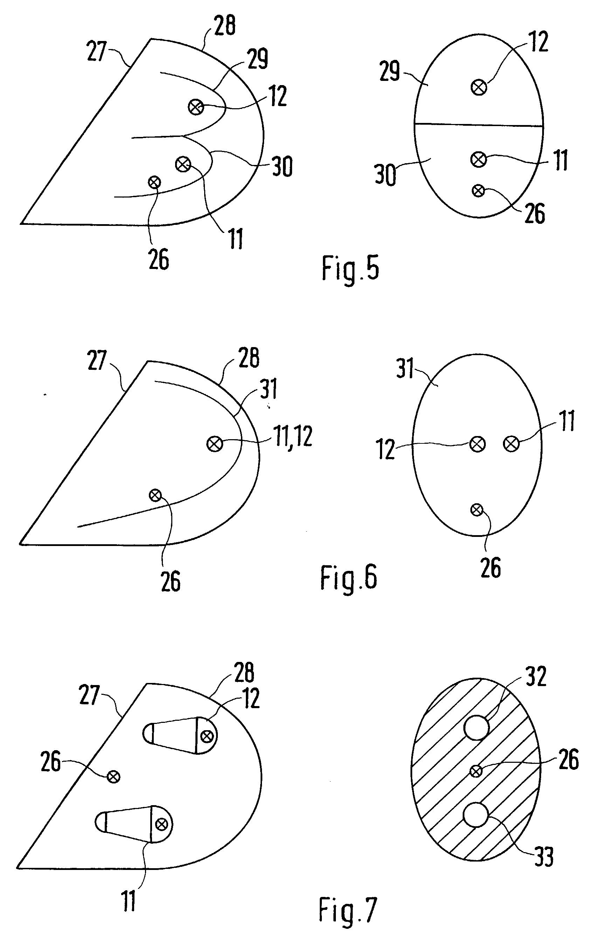

Mögliche Ausbildungen der Scheinwerfer 11, 12 sind in den Fig. 5 bis 7 dargestellt.

Zweckmäßigerweise können die Scheinwerfer 11, 12 unter einem gemeinsamen Deckglas 27 in einem gemeinsamen Gehäuse 28 angeordnet sein. Zusätzlich zu den Scheinwerfern 11, 12 ist ein Positionslicht 26 vorgesehen.

Im ersten Ausführungsbeispiel nach Fig. 5 ist für den zweiten Scheinwerfer 12 ein eigener Reflektor 29 vorgesehen, während ein weiterer Reflektor 30 sowohl vom Zusatzscheinwerfer 11 wie auch vom Positionslicht 26 genutzt wird.

Demgegenüber sind im zweiten Ausführungsbeispiel nach Fig. 6 beide Scheinwerfer 11, 12 in einem gemeinsamen Reflektor 31 angeordnet. Der Zusatzscheinwerfer 11 (genauer die Lichtquelle des Zusatzscheinwerfers 11) ist hierbei gegenüber der Lichtquelle für den Abblendlicht-Scheinwerfer 12 versetzt angeordnet, um so das gewünschte Lichtbündel 23 zu erzeugen. Die Positionsleuchte 26 kann ebenfalls im einzigen Reflektor 31 angeordnet werden.

Im dritten Ausführungsbeispiel nach Fig. 7 sind die Scheinwerfer 11, 12 als getrennte Projektionsscheinwerfer ausgeführt. Diese erzeugen auf der gemeinsamen Abdeckscheibe 27 getrennte Lichtdurchtrittsflächen 32, 33. Die Positionsleuchte 26 ist hierbei zwischen den Scheinwerfern 11 und 12 oder an anderer geeigneter Stelle innerhalb des Gehäuses 28 so angeordnet, daß das aus der Positionsleuchte 26 austretende Licht den außerhalb der Lichtdurchtrittsflächen 32, 33 liegenden, schraffiert dargestellten Bereich der gemeinsamen Abdeckscheibe 27 aufhellt. Alternativ kann zur Aufhellung auch Streulicht aus dem Abblendlicht-Scheinwerfer 12 verwendet werden; die Positionsleuchte 26 kann in diesem Fall an anderer Stelle angeordnet werden.

In den Ausführungsbeispielen nach Fig. 5 bis 7 ist wesentlich, daß der Zusatzscheinwerfer 11 stets in Verbindung mit einem weiteren Scheinwerfer, hier dem Abblendlicht-Scheinwerfer 12 oder der Positionleuchte 26, so angeordnet ist, daß sich gemeinsame Lichtaustrittsflächen ergeben. So weisen im Ausführungsbeispiel nach Fig. 5 der Zusatzscheinwerfer 11 sowie die Positionsleuchte 26, im zweiten Ausführungsbeispiel nach Fig. 6 der Zusatzscheinwerter 11 und der Abblendlicht-Scheinwerfer 12 und im dritten Ausführungsbeispiel nach Fig. 7 der Zusatzscheinwerfer 11 (bzw. dessen Lichtdurchtrittsfläche 33) und die Positionsleuchte 26 jeweils einen gemeinsamen Lichtaustrittsbereich auf.

Fig. 8 zeigt schematisch eine Einrichtung 35 zum Verschwenken des Zusatzscheinwerfers 11. Wie schon in Fig. 1 gezeigt ist der Zusatzscheinwerfer 11 beleuchtungstechnisch über die Schalteinrichtung 9 und den Ausgang 8 des (hier nicht gezeigten) Steuergerätes 7 angesteuert, während der Stellmotor 34 mit einem Ausgang 8' des Steuergerätes 7 verbunden ist. Der Zusatzscheinwerfer 11 ist im Scheinwerfergehäuse 28 mit Hilfe zweier Gelenke 36' und 36'' schwenkbar gelagert und kann über den Schwenkmotor 34 verschwenkt werden, der hierzu mit dem Zusatzscheinwerfer 11 verbunden ist. Der Schwenkbereich beträgt nur wenige Grad. In seiner dargestellten Ausgangsposition erzeugt der Zusatzscheinwerfer 11 den Lichtkegel 23 (vgl. Fig. 3), während er in seiner zweiten Position, in die er durch den Stellmotor 34 verschwenkt wird, den Lichtkegel 23' erzeugt.

In Fig. 9 ist die Anordnung der Gelenke 36' und 36'' schematisch dargestellt, die so gewählt ist, daß sich eine diagonal liegende Schwenkachse ergibt, deren Lage so gewählt ist, daß der Zusatzscheinwerfer 11 zwischen seiner Ausgangsposition und seiner zweiten Position verschwenkt werden kann. Der Angriffspunkt des Stellmotores 34 muß hierbei lediglich so gewählt werden, das eine Kraftangriffsachse des Stellmotores 34 nicht die Schwenkachse schneidet.

Die Steuereinrichtung 7 wird den Stellmotor 34 dann ansteuern (und damit den Zusatzscheinwerfer 11 in seine zweite Position verschwenken), wenn beispielsweise der Fahrer die Lichthupe betätigt oder wenn das Fernlicht einschaltet. Wenn das Steuergerät 7 Autobahnfahrt erkennt, kann der Zusatzscheinwerfer 11 bei entsprechender Auslegung des Ausleuchtung (dies ist eine harte Hell-Dunkel-Grenze in Verbindung mit einer Neigung von ca. - 0,2%) auch als Reichweitenunterstützung für das Abblendlicht eingeschaltet werden. Als Ausgangsposition ist die Ausleuchtung des Fahrbahnrandbereiches 24 gewählt, damit bei einem Ausfall des Stellmotores 34 entgegenkommende Fahrzeuge 18 nicht durch den in der zweiten Position befindlichen Zusatzscheinwerfer 11 geblendet werden.

## Patentansprüche

1. Vorrichtung zur Steuerung der Lichtverteilung einer Scheinwerferanordnung (1) eines Fahrzeuges (17), mit
- einer ersten Lichtquelle (11) für ein Zusatzlicht,
- einer zweiten Lichtquelle (12) für ein Fahrlicht,
**dadurch gekennzeichnet**, daß
- die erste Lichtquelle (11) schwenkbar gelagert ist und in einer ersten Position am Fahrbahnrand liegenden Bereiche (24) der eigenen Fahrbahn (21) und in einer zweiten Position die eigene Fahrbahn ausleuchtet.

2. Vorrichtung nach Anspruch 1, **dadurch gekennzeichnet**, daß die erste Lichtquelle (11) einen gemeinsamen Lichtaustrittsbereich mit wenigstens einer anderen Lichtquelle (12, 26) aufweist.

3. Vorrichtung nach Anspruch 2, **dadurch gekennzeichnet**, daß die erste Lichtquelle (11) mit einem Positionslicht (26) kombiniert ist.

4. Vorrichtung nach Anspruch 2, **dadurch gekennzeichnet**, daß die erste Lichtquelle (11) mit einem Abblendlicht (12) kombiniert ist.

5. Vorrichtung nach einem der Ansprüche 1 bis 4, **dadurch gekennzeichnet**, daß die Lichtquellen (11, 12, 26) einen gemeinsamen Reflektor (31) aufweisen.

6. Vorrichtung nach einem der Ansprüche 1 bis 5, **dadurch gekennzeichnet**, daß die Lichtquellen eine gemeinsame Deckscheibe (27) aufweisen.

7. Vorrichtung nach Anspruch 4, **dadurch gekennzeichnet**, daß die erste Lichtquelle (11) und die Lichtquelle für das Abblendlicht (12) unter einer gemeinsamen Deckscheibe (27) angeordnet sind, wobei für die erste Lichtquelle (11) und das Abblendlicht (12) jeweils separate Lichtduchtrittsbereiche (32, 33) vorgesehen sind, und der verbleibende Bereich der Deckscheibe zusätzlich aufgehellt ist.

8. Vorrichtung nach einem der vorstehenden Ansprüche, **gekennzeichnet durch**:
- wenigstens einen ersten Lichtsensor (1), der die auf einen Fahrer des Fahrzeuges aus einem Bereich (1) einer Gegenfahrbahn (20) einwirkenden Lichtimissionen erfaßt,
- eine Vergleichseinrichtung (14), die die Intensität der Lichtimissionen für den erfaßten Bereich (I) mit einem Schwellwert vergleicht,
- eine Steuereinrichtung (7) zur Einstellung der Lichtverteilung der Scheinwerferanordnung (1), die abhängig von dem Signal der Vergleichseinrichtung sowohl die erste Lichtquelle (11) zu- oder abschaltet als auch die Position der ersten Lichtquelle (11) einstellt.
